# EUROPÄISCHE PATENTSCHRIFT

(11) **EP 2 268 903 B1**
(45) Veröffentlichungstag und Bekanntmachung des Hinweises auf die Patenterteilung: **10.06.2015**
(21) Anmeldenummer: 09721277.3
(22) Anmeldetag: 18.03.2009
(51) Int. Cl.: F01N 3/021, F01N 11/00

(54) **DIAGNOSEVERFAHREN FÜR EINEN PARTIKELFILTER**
DIAGNOSTIC METHOD FOR A PARTICULATE FILTER
PROCÉDÉ DE DIAGNOSTIC POUR UN FILTRE À PARTICULES

(30) Priorität: 20.03.2008 DE 102008015256
(43) Veröffentlichungstag der Anmeldung: 05.01.2011
(73) Patentinhaber: Continental Automotive GmbH, 30165 Hannover (DE)
(72) Erfinder: ANTE, Johannes, 93055 Regensburg (DE); WEIGL, Manfred, 93161 Viehhausen (DE)
(86) Internationale Anmeldenummer: PCT/EP2009/053175
(87) Internationale Veröffentlichungsnummer: WO 2009/115542

(56) Entgegenhaltungen:
- DE-A1-102006 029 990
- DE-A1-102006 057 528

## Beschreibung

Die Erfindung betrifft ein Diagnoseverfahren für einen im Abgasstrom eines Verbrennungsmotors angeordneten Partikelfilter, wobei eine Partikelkonzentration mittels eines dem Partikelfilter nachgeschalteten Partikelsensors erfasst wird.

Ein gattungsgemäßes Diagnoseverfahren ist bereits aus DE 10 2006 057 528 A bekannt.

Bei dem Verbrennungsmotor handelt es sich vorzugsweise um einen Dieselmotor. Alternativ kann der Verbrennungsmotor ein Benzinmotor oder ein gasbetriebener Verbrennungsmotor sein. Typischerweise ist der Verbrennungsmotor zum Antrieb eines Kraftfahrzeuges, wie z. B. eines Personenkraftwagens, vorgesehen. Der Verbrennungsmotor kann alternativ zum stationären Betrieb, z. B. in einer Anlage, vorgesehen sein. Insbesondere handelt es sich bei dem Partikelfilter um einen Rußfilter für Dieselruß und bei dem Partikelsensor um einen Rußsensor.

Die gegenwärtige Feinstaubdiskussion zur Luftreinhaltung haben die Fahrzeughersteller dazu gebracht, insbesondere bei dieselmotorbetriebenen Fahrzeugen Rußpartikelfilter vorzusehen. Hierzu ist eine On-Board-Diagnose aller abgasrelevanten Komponenten des Fahrzeugs erforderlich. Entsprechende Fehlfunktionen werden in einem Fehlerspeicher des Fahrzeuges eingetragen. Der Besitzer des Fahrzeugs wird gegebenenfalls darauf hingewiesen, sein Fahrzeug in einer Werkstatt überprüfen oder reparieren zu lassen.

Für die Überwachung der korrekten Funktion eines Partikelfilters ist aus dem Stand der Technik eine Differenzdruckmessung bekannt. Es sind aber auch Partikelsensoren bekannt, welche dem Partikelfilter nachgeschaltet sind und einen von der Partikelkonzentration im dortigen Abgasstrom korrespondierenden Messwert ausgeben.

Die nach dem Partikelfilter maximal zulässigen, zumeist gesetzlich vorgeschriebenen Partikelkonzentrationen sind extrem gering und erfordern einen erheblichen messtechnischen Aufwand. So sind beispielsweise für zukünftige Dieselsysteme zur Einhaltung der EURO-5-Grenzwerte von weniger als 5 mg/km, welche in etwa einen volumenbezogenen Grenzwert von 2 mg/m³ entsprechen, hochgenaue Partikelsensoren erforderlich. Derartige Sensoren müssen einen Detektionsschwellwert aufweisen, der im Bereich des volumenbezogenen Grenzwertes liegt. Insbesondere ist eine hohe Absolutgenauigkeit erforderlich. Um zusätzlich eine sensorabhängige Nullpunktdrift und Querempfindlichkeit messtechnisch zu berücksichtigen, müssten die derzeitig verfügbaren Partikelsensoren einen deutlich niedrigeren Detektionsschwellwert aufweisen, wie z. B. 0,5 mg/m³. Allerdings sind Partikelsensoren mit einer derart hohen messtechnischen Auflösung sehr teuer.

Es ist somit eine Aufgabe der Erfindung, ein Diagnoseverfahren anzugeben, welches im Vergleich zum Stand der Technik wirtschaftlicher betrieben werden kann.

Die Aufgabe wird für das Verfahren durch ein Diagnoseverfahren mit den Merkmalen des Patentanspruchs 1 gelöst. Alternativ wird die Aufgabe durch ein Diagnoseverfahren mit den Merkmalen des Patentanspruchs 2 gelöst. Im abhängigen Anspruch 3 ist eine vorteilhafte Verfahrensvariante für beide Verfahren angegeben.

Erfindungsgemäß werden mittels einer Motorsteuerung die verbrennungsrelevanten Motorparameter kurzzeitig derart verändert, dass eine motorseitige Rohemissionskonzentration signifikant ansteigt. Es wird eine Filterfehlermeldung ausgegeben, wenn die erfassten zugehörigen Messwerte der Partikelkonzentration einen Detektionsschwellwert des Partikelsensors übersteigen, der größer ist als ein vorgegebener, vorzugsweise volumenbezogener Partikelgrenzwert.

Mit "signifikant" ist gemeint, dass ein Ansprechen des Partikelsensors messtechnisch gut erfassbar ist. Vorzugsweise erfolgt die Veränderung der Motorparameter derart, dass die motorseitige Rohemissionskonzentration mehr oder weniger sprunghaft oder rampenförmig ansteigt. Alternativ kann zu dem volumenbezogenen Grenzwert ein masse- oder kilometerbezogener Grenzwert oder auch ein Grenzwert ohne weitere Bezugsangaben herangezogen werden.

Die Motorsteuerung ist vorzugsweise eine elektronische prozessorgestützte Steuereinheit, welche Signaleingänge und Signalausgänge aufweist. Die Signaleingänge dienen unter anderem zum Erfassen einer aktuellen Luftmenge, einer Motortemperatur, einer Drehzahl, eines vom Gaspedal vorgegebenen Sollwertes, eines vom Partikelfilter erfassten Konzentrationswertes und dergleichen. Die Signalausgänge dienen unter anderem zur Ansteuerung von Einspritzventilen, einer Luftmengendrossel und eines Rückführventils zum Einstellen des Grades der Abgasrückführung zurück in den Motor.

Die verbrennungsrelevanten Motorparameter sind insbesondere der Luftmassenstrom, das Drehmoment, die Temperatur, der Grad der Abgasrückführung und dergleichen. Auf Basis dieser Parameter kann die Motorsteuerung rechnerisch die zu erwartende Rohemissionskonzentration im motorseitigen Abgasstrom, das heißt die Rohemissionskonzentration direkt am Auslass des Motors, abhängig von einem jeweiligen Betriebszustand bzw. von einer entsprechenden Betriebszustandsänderung ermitteln.

Grundidee der vorliegenden Erfindung ist, dass ein erzwungener oder ein bereits vorliegender, insbesondere fahrerseitig initiierter, stark überhöhter motorseitiger Partikelausstoß zum Testen des nachgeschalteten Partikelfilters verwendet wird. Ist der Partikelfilter defekt, so liegt nach dem Partikelfilter eine gleichfalls stark überhöhte Partikelkonzentration vor, für deren Detektion dann vorteilhaft ein im Vergleich zum Stand der Technik weit unempfindlicherer und daher kostengünstigerer Partikelsensor verwendet werden kann.

Ein derartiger kurzzeitiger Partikelausstoß sollte eine Rohemissionskonzentration aufweisen, die im Vergleich zu einem weitgehend optimierten Teillastbetrieb bei einem 10- bis 100-fachen Konzentrationswert, vorzugsweise bei einem 50- bis 100-fachen Konzentrationswert liegt. Dabei sind die derzeit verfügbaren Partikelfilter in der Lage, auch einen derart stark überhöhten Partikelausstoß auszufiltern, sodass die Partikelkonzentration nach dem Partikelfilter noch deutlich unterhalb zulässiger gesetzlicher Vorgaben liegt. Gemäß der Erfindung muss der Partikelsensor daher lediglich einen Detektionsschwellwert aufweisen, der zur zuverlässigen Detektion eben eines solchen stark überhöhten Partikelausstoßes bei defektem Partikelfilter noch ausreichend ist. Der Detektionsschwellwert kann nun im Vergleich zu herkömmlichen teuren Partikelsensoren einen zumindest 10-fach höheren Detektionsschwellwert aufweisen, wie z. B. 5 mg/m³.

Nach einer Ausführungsform des erfindungsgemäßen Diagnoseverfahrens erfolgt die Veränderung der verbrennungsrelevanten Motorparameter in einem weitgehend stationären Teillastbetrieb. Dadurch ist ein besonders hoher Anstieg in sehr kurzer Zeit von einem vergleichsweise kleinen Rohemissionskonzentrationswert auf einen vielfach höheren Testkonzentrationswert möglich.

Mit einem "normalen" stationären Teillastbetrieb ist gemeint, dass das Fahrzeug nicht oder nur mäßig beschleunigt wird, wobei dann der Schadstoffausstoß durch die in diesem Betrieb mögliche, weitgehend optimale Verbrennung des Kraftstoffs vergleichsweise gering ist.

Typischweiser ist der Anstieg im Messsignal gegenüber dem Anstieg der Rohemissionskonzentration zeitlich geringfügig verschoben. Die zeitliche Verschiebung beträgt üblicherweise weniger als 1 Sekunde. Mit "kurzzeitiger" Veränderung der verbrennungsrelevanten Motorparameter ist ein Zeitraum von weniger als einer Sekunde, insbesondere von wenigen 10-tel Sekunden, gemeint. Der Zeitraum sollte jedoch so bemessen sein, dass eine ausreichende Emissionsspitze motorseitig erzeugt werden kann, welcher gleichzeitig aber auch so kurz ist, dass der Fahrbetrieb nicht wesentlich beeinträchtigt wird, wie z. B. in Form einer kurzzeitigen Beschleunigung. Vorzugsweise werden die Motorparameter zur regelmäßigen Überprüfung des Partikelfilters kurzzeitig und wiederholt verändert, insbesondere in regelmäßigen Abständen, um einen Emissionsstoß zu erzwingen, sofern es die aktuell vorliegenden Motorparameter erlauben. Typischerweise liegen die Zeitwerte zwischen derartigen Emissionsstößen im Bereich von ca. 10 Minuten. Sie können je nach Erfordernis der Überwachung auch in kleineren Zeitabständen, wie z. B. in fünfminütigem Abstand, oder auch in größeren Zeitabständen, wie z. B. in halbstündigem oder mehrstündigem Abstand, erfolgen. Alternativ oder zusätzlich können die Emissionsstöße kilometerabhängig ausgelöst werden, wie z. B. alle 1000 km.

Alternativ wird die Aufgabe der vorliegenden Erfindung durch ein Diagnoseverfahren gelöst, bei welchem der Verbrennungsmotor auf einen Betriebszustand hin überwacht wird, bei dem sich eine motorseitige Rohemissionskonzentration signifikant erhöht. Es wird dann eine Filterfehlermeldung ausgegeben, wenn die erfassten zugehörigen Messwerte der Partikelkonzentration einen Detektionsschwellwert des Partikelsensors übersteigen, der insbesondere deutlich größer ist als ein vorgegebener, vorzugsweise volumenbezogener Partikelgrenzwert.

Im Vergleich zu dem vorher genannten erzwungenen Emissionsstoß wird hier motorsteuerungsseitig sozusagen gezielt auf einen solchen Emissionsstoß gewartet, wie er z. B. bei starken Beschleunigungsvorgängen auftreten kann. Insbesondere ist ein solcher Betriebszustand ein Betrieb mit hoher Last, insbesondere ein Volllastbetrieb. Wird ein solcher Lastfall erkannt, wie z. B. unter anderem durch das fahrerseitige Durchdrücken des Gaspedals, so wird zeitlich dazu korrelierend das Messsignal des Partikelsensors auf ein signifikantes Ansteigen hin untersucht. In diesem Fall liegt dann voraussichtlich ein defekter Partikelfilter vor.

Nach einer weiteren Ausführungsform der Diagnoseverfahren basiert der Partikelgrenzwert auf einem für den Typ des Verbrennungsmotors streckenbezogenen Abgasgrenzwert einer maßgeblichen Abgasnorm. Ein derartiger Wert kann z. B. in einem Speicher der Motorsteuerung hinterlegt sein. Üblicherweise werden unterschiedliche Abgasgrenzwerte für den jeweiligen Motortyp angegeben. So beträgt dieser für einen Dieselmotor gemäß der neuen EURO-5-Norm nur noch ca. 5 mg/km. Dieser Abgasgrenzwert wird dann in einen abgasmengenabhängigen Wert umgerechnet, welcher je nach Grad der Abgasrückführung zurück in den Motorraum etwa in dem Bereich von 2 mg/m³ liegt. Dieser Wert erfolgt rechnerisch daraus, dass für eine umweltrelevante Referenzfahrt von 11 km eine Abgasmenge von ca. 25 m³ emittiert wird. Umgerechnet auf einen Kubikmeter beträgt die Masse der Schadstoffpartikel 55 mg : 25 = 2,2 mg. Alternativ können auch andere Abgasgrenzwerte, die zumeist masse- oder streckenbezogen sind, herangezogen werden. Diese sind abhängig von regionalen oder nationalen Abgasnormen.

Die Aufgabe wird durch ein zu den Diagnoseverfahren korrespondierendes Diagnosesystem gelöst. In diesem Fall weist die Motorsteuerung Mittel zur Durchführung eines der beiden erfindungsgemäßen Diagnoseverfahren oder beider erfindungsgemäßen Diagnoseverfahren auf. Weiterhin weist der Partikelsensor einen Detektionsschwellwert auf, der insbesondere deutlich größer ist als ein vorgegebener, insbesondere volumenbezogener Partikelgrenzwert.

Die Mittel der Motorsteuerung sind insbesondere Softwareroutinen, welche die einzelnen Verfahrensschritte der erfindungsgemäßen Diagnoseverfahren nachbilden und durch einen Mikroprozessor oder Mikrocontroller ausgeführt werden.

Ein derartiges Diagnosesystem ist vorteilhaft in einem Dieselkraftfahrzeug verwendbar.

Nach einer Ausführungsform des Diagnosesystems liegt der Detektionsschwellwert des Partikelsensors zwischen dem 2-bis 20-fachen, insbesondere zwischen dem 5- bis 10-fachen, des vorgegebenen Partikelgrenzwertes. Derartige Partikelsensoren sind erheblich kostengünstiger als gegenwärtig verfügbare Partikelsensoren mit einem Detektionsschwellwert von besser als 1 mg/m³.

Insbesondere ist der Partikelfilter ein Rußfilter und der Partikelsensor ein Rußsensor. Gerade die Rußpartikel werden hinsichtlich der Feinstaubbelastung in der Umwelt als besonders kritisch angesehen.

Das erfindungsgemäße Diagnosesystem ist besonders vorteilhaft in einem Kraftfahrzeug, insbesondere in einem Dieselkraftfahrzeug, verwendbar.

Die Erfindung sowie vorteilhafte Ausführungsformen der Erfindung werden im Weiteren anhand der nachfolgenden Figuren näher beschrieben. Es zeigen:
- FIG 1: beispielhaft eine Schema eines Diagnosesystems für ein Kraftfahrzeug,
- FIG 2: ein Zeitdiagramm mit eingetragenen Verläufen unterschiedlicher Partikelkonzentrationen und
- FIG 3: ein Ablaufdiagramm des erfindungsgemäßen Verfahrens gemäß Anspruch 2.

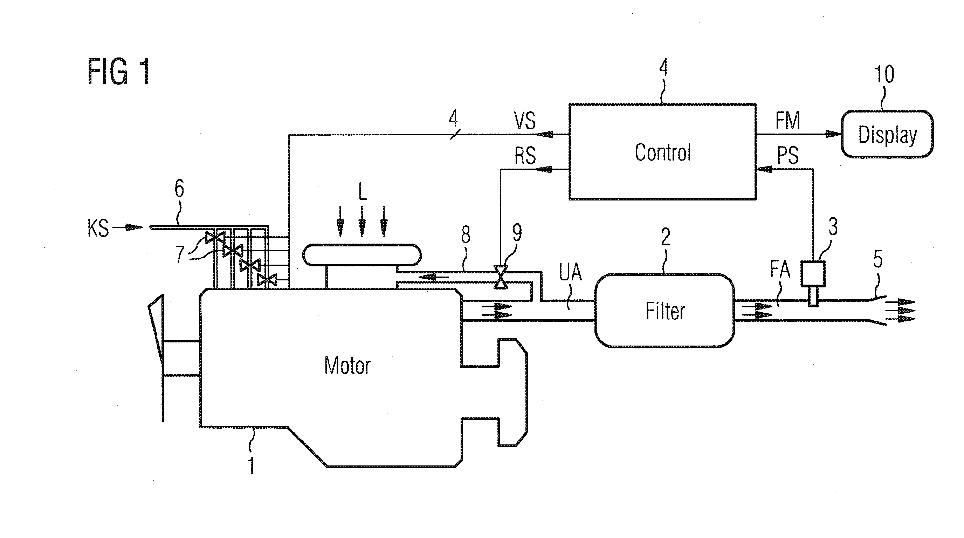

FIG 1 zeigt beispielhaft ein Schema eines Diagnosesystems für einen im Abgasstrom UA eines Verbrennungsmotors 1 angeordneten Partikelfilter 2. Der gezeigte Verbrennungsmotor 1 ist ein Dieselmotor, welcher zum Antrieb eines Dieselkraftfahrzeuges vorgesehen ist. Dem Motor 1 wird Kraftstoff KS über eine Kraftstoffleitung 6 zugeführt. Mit dem Bezugszeichen 7 sind Einspritzventile bezeichnet, welche von einer Motorsteuerung 4 über nicht weiter bezeichnete Ansteuerleitungen zum Einspritzen eines Teils des Kraftstoffs KS in die jeweiligen Zylinder angesteuert werden können. Mit VS ist das entsprechende Ansteuersignal bezeichnet. Weiterhin ist mit dem Bezugszeichen L Luft bezeichnet, welche von dem Motor 1 zur Verbrennung des Kraftstoffes KS angesaugt wird. Im motorseitigen Abgasstrom UA ist weiterhin ein Partikelfilter 2, insbesondere ein Rußfilter, geschaltet. Mit dem Bezugszeichen FA ist der gefilterte Abgasstrom bezeichnet. In diesem Abgasstrom FA ist ein Partikelsensor 3, insbesondere ein Rußfilter, angeordnet. Am Ende des Abgasstranges ist schließlich ein mit dem Bezugszeichen 5 bezeichneter Auspuff vorhanden.

Der Partikelsensor 3 ist zur Erfassung einer Partikelkonzentration FW vorgesehen. Ein dazu korrespondierendes Filteroder Sensorsignal PS wird der Motorsteuerung 4 zugeführt. Weiterhin ist beispielhaft ein Abgasrückführventil 9 vorhanden, welches gleichfalls von der Motorsteuerung 4 ansteuerbar ist. Mit dem Bezugszeichen RS ist ein zugehöriges Abgasrückführventil-Ansteuersignal bezeichnet. Über dieses Signal RS kann der Grad der Abgasrückführung 8 von dem ungefilterten Abgasstrom UA zurück in den Motorraum eingestellt werden. Mit dem Bezugszeichen FM ist eine Filterfehlermeldung bezeichnet, welche auf einem Display 10 ausgegeben werden kann. Das Display kann z. B. eine elektronische Anzeige, vorzugsweise ein sogenanntes Display für eine On-Bord-Diagnose, sein.

Im Beispiel der FIG 1 sind die verbrennungsrelevanten Motorparameter eine über die Einspritzventile 7 einspritzbare Kraftstoffmenge sowie der Grad der Abgasrückführung im Kreis der Abgasrückführung 8. Darüber hinaus kann der Motor 1 eine nicht weiter dargestellte steuerbare Luftdrosselklappe aufweisen, um die benötige Luftmenge für den Verbrennungsmotor 1 im Betrieb einzustellen. Schließlich weist die Motorsteuerung 4 nicht weiter bezeichnete Mittel zur Durchführung der erfindungsgemäßen Diagnoseverfahren auf. Die Mittel können dazu ausgebildet sein, je nach Betriebszustand eines der beiden erfindungsgemäßen Diagnoseverfahren oder auch beide Diagnoseverfahren auszuführen. So kann die Motorsteuerung 4 vorzugsweise das erfindungsgemäße Diagnoseverfahren gemäß Anspruch 2 ausführen, um auf fahrerseitig initiierte Emissionsausstöße zum Testen des Partikelfilters 2 zu warten. Erst nach Verstreichen eines längeren Zeitraums ohne Filterprüfung kann dann entsprechend dem erfindungsgemäßen Diagnoseverfahren gemäß Anspruch 1 ein Emissionsstoß motorsteuerungsseitig erzwungen werden.

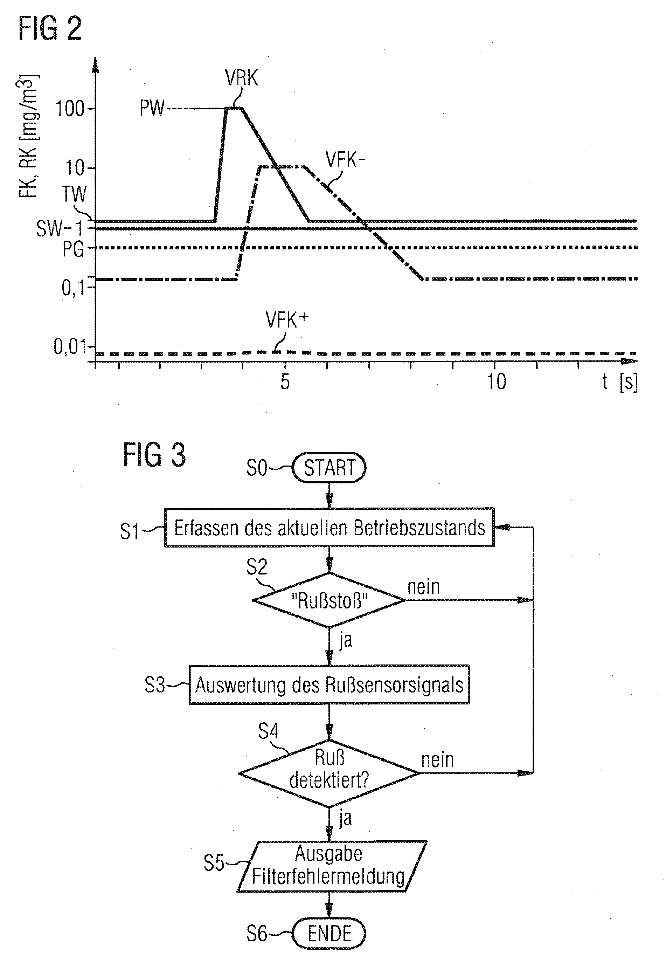

FIG 2 zeigt ein Zeitdiagramm mit verschiedenen zeitlichen Verläufen von Partikelkonzentrationen FK, RK. Mit dem Bezugszeichen FK ist eine filterseitige Partikelkonzentration bezeichnet, gemessen in mg/m³, welche durch den Partikelsensor 3 erfasst wird. Mit RK ist eine motorseitige Rohemissionskonzentration bezeichnet, welche im ungefilterten Abgasstrom UA, d. h. direkt am Ausgang des Motors 1, vorhanden ist. Die Rohemissionskonzentration RK entspricht somit der ungefilterten Partikelkonzentration. Beide Partikelkonzentrationen FK, RK sind logarithmisch aufgetragen.

Mit VRK ist der über eine Zeitachse t aufgetragene zeitliche Verlauf der Rohemissionskonzentration RK dargestellt. Wie das Diagramm zeigt, steigt die Rohemissionskonzentration RK nach ungefähr 3 Sekunden signifikant, insbesondere sprunghaft, von einem Rohemissionskonzentrationswert TW in einem stationären Teillastbetrieb auf einen beispielhaft 100-fach höheren Testkonzentrationswert PW an. Dieser Anstieg kann z. B. durch die gezielte kurzfristig Veränderung der verbrennungsrelevanten Motorparameter erreicht werden, wie z. B. durch eine schlagartige Erhöhung der eingespritzten Treibstoffmenge, die dann nicht vollständig verbrannt werden kann. Sie kann alternativ oder zusätzlich durch eine schlagartige maximale Rückführung des ungefilterten Abgasstroms UA zurück in den Motorraum zur "wiederholten" Verbrennung erreicht werden. Ursache für einen solchen stark überhöhten Emissionsanstieg ist die nicht vollständige Verbrennung des eingespritzten Kraftstoffes aufgrund des fehlenden Luftsauerstoffs mit einer einhergehenden Rußbildung. Letztere ist insbesondere bei Fahrzeugen ohne Partikelfilter daran erkennbar, dass eine schwarze Abgaswolke am Auspuff des Fahrzeuges sichtbar ist. Der beispielhaft im Bereich von einer knappen Sekunde ansteigende Emissionsausstoß kann alternativ auch während des üblichen Fahrbetriebs auftreten. Typischerweise ereignet sich ein solcher Emissionsstoß dann, wenn der Fahrer aus einem Teillastbereich das Gaspedal vollständig "durchdrückt", um das Fahrzeug maximal zu beschleunigen.

Mit dem Bezugszeichen VFK+ ist eine Partikelkonzentration bei intaktem Partikelfilter 2 gezeigt, welche sich mit einem leichten zeitlichen Versatz, insbesondere in einem Bereich von weniger als 1 Sekunde, nur unwesentlich erhöht. Dabei steigt die logarithmisch aufgetragene Partikelkonzentration FK nur minimal an und verbleibt unterhalb der Nachweisgrenze.

Ist dagegen der Partikelfilter 2 defekt, wie z. B. aufgrund eines Wabenbruchs, so kann ein noch beträchtlicher Teil der ungefilterten Partikel, wie z. B. 10 %, den Partikelfilter 2 basieren. Dies zeigt der punktgestrichelte Verlauf VFK-, welcher die Partikelkonzentration FK nach dem defekten Partikelfilter 2 zeigt. Wie die FIG 2 zeigt, steht die vom Partikelsensor 3 gemessene Partikelkonzentration FK in zeitlicher Korrelation zu dem Emissionsstoß gemäß dem Verlauf VRK. Im vorliegenden Beispiel beträgt der zeitliche Versatz weniger als 1 Sekunde.

Erfindungsgemäß wird nun eine Filterfehlermeldung FM ausgegeben, wenn die erfassten zugehörigen Messwerte der Partikelkonzentration FK einen Detektionsschwellwert SW des Partikelsensors 3 übersteigen, der insbesondere deutlich größer ist als ein vorgegebener, vorzugsweise volumenbezogener Partikelgrenzwert PG. Beide Grenzwerte SW, PG sind im Beispiel der FIG 2 eingetragen.

FIG 3 zeigt ein Ablaufdiagramm des erfindungsgemäßen Diagnoseverfahrens gemäß Anspruch 2. Im Verfahrensschritt S0 erfolgt typischerweise eine Parametrierung bzw. Kalibrierung der für das Diagnoseverfahren wesentlichen Komponenten, wie z. B. des Partikelsensors. Im darauf folgenden Verfahrensschritt S1 wird der Verbrennungsmotor motorsteuerungsseitig auf einen Betriebszustand hin überwacht, bei dem sich eine motorseitige Rohemissionskonzentration signifikant erhöht. Ist dies nicht der Fall, so wird zum Schritt S2 zurückverzweigt. Anderenfalls erfolgt im Schritt S3 zeitlich dazu korreliert eine Messung der filterseitigen Partikelkonzentration mittels des Partikelsensors. Ist nun gemäß dem nachfolgenden Schritt S4 ein signifikanter Signalanstieg des Partikelsensorsignals PS detektierbar, so wird eine Fehlermeldung FM im darauf folgenden Schritt S5 ausgegeben. Mit S6 ist das Ende des erfindungsgemäßen Verfahrens bezeichnet.

## Patentansprüche

1. Diagnoseverfahren für einen im Abgasstrom (UA) eines Verbrennungsmotors (1) angeordneten Partikelfilter (2), wobei eine Partikelkonzentration (FK) mittels eines dem Partikelfilter (2) nachgeschalteten Partikelsensors (3) erfasst wird, **dadurch gekennzeichnet,**
- **dass** mittels einer Motorsteuerung (4) die verbrennungsrelevanten Motorparameter kurzzeitig derart verändert werden, dass eine motorseitige Rohemissionskonzentration (RK) signifikant ansteigt, wobei die Veränderung der verbrennungsrelevanten Motorparameter in einem weitgehend stationären Teillastbetrieb erfolgt, und
- **dass** eine Filterfehlermeldung (FM) ausgegeben wird, wenn die erfassten zugehörigen Messwerte der Partikelkonzentration (FK) einen Detektionsschwellwert (SW) des Partikelsensors (3) übersteigen, der insbesondere deutlich größer ist als ein vorgegebener, vorzugsweise volumenbezogener Partikelgrenzwert (PG).

2. Diagnoseverfahren für einen im Abgasstrom (UA) eines Verbrennungsmotors (1) angeordneten Partikelfilter (2), wobei eine Partikelkonzentration (FK) mittels eines dem Partikelfilter (2) nachgeschalteten Partikelsensors (3) erfasst wird, **dadurch gekennzeichnet,**
- **dass** der Verbrennungsmotor (1) auf einen Betriebszustand hin überwacht wird, bei dem sich eine motorseitige Rohemissionskonzentration (RK) signifikant erhöht, wobei der überwachte Betriebszustand ein Betrieb mit hoher Last, insbesondere ein Volllastbetrieb ist, und
- **dass** eine Filterfehlermeldung (FM) ausgegeben wird, wenn die erfassten zugehörigen Messwerte der Partikelkonzentration (FK) einen Detektionsschwellwert (SW) des Partikelsensors (3) übersteigen, der insbesondere deutlich größer ist als ein vorgegebener, vorzugsweise volumenbezogener Partikelgrenzwert (PG).

3. Diagnoseverfahren nach einem der vorangegangenen Ansprüche, **dadurch gekennzeichnet, dass** der volumenbezogene Partikelgrenzwert (PG) auf einem für den Typ des Verbrennungsmotors (1) streckenbezogenen Abgasgrenzwert (AG) einer maßgeblichen Abgasnorm basiert.

## Claims

1. Diagnostic method for a particle filter (2) which is arranged in the exhaust gas stream (UA) of an internal combustion engine (1), a particle concentration (FK) being sensed by means of a particle sensor (3) which is connected behind the particle filter (2), **characterized**
- **in that** the combustion-relevant engine parameters are changed temporarily by means of an engine controller (4) in such a way that an engine-side raw-emission concentration (RK) rises significantly, the combustion-relevant engine parameters being changed in a largely steady-state part-load mode, and
- **in that** a filter fault message (FM) is output if the sensed associated measured values of the particle concentration (FK) exceed a detection threshold value (SW) of the particle sensor (3), which detection threshold value (SW) is, in particular, considerably greater than a predefined, preferably volume-related particle limit value (PG).

2. Diagnostic method for a particle filter (2) which is arranged in the exhaust gas stream (UA) of an internal combustion engine (1), a particle concentration (FK) being sensed by means of a particle sensor (3) which is connected behind the particle filter (2), **characterized**
- **in that** the internal combustion engine (1) is monitored for an operating state, in which an engine-side raw-emission concentration (RK) increases significantly, the monitored operating mode being a mode at high load, in particular a full-load mode, and
- **in that** a filter fault message (FM) is output if the sensed associated measured values of the particle concentration (FK) exceed a detection threshold value (SW) of the particle sensor (3), which detection threshold value (SW) is, in particular, considerably greater than a predefined, preferably volume-related particle limit value (PG).

3. Diagnostic method according to one of the preceding claims, **characterized in that** the volume-related particle limit value (PG) is based on an exhaust gas limit value (AG) of a relevant exhaust gas standard, which limit value is distance-based for the type of internal combustion engine (1).

## Revendications

1. Procédé de diagnostic pour un filtre (2) à particules disposé dans un courant (UA) de gaz d'échappement d'un moteur (1) à combustion interne, dans lequel on détecte une concentration (FK) de particules au moyen d'un capteur (3) de particules monté en aval du filtre (2) à particules, **caractérisé**
- **en ce que** l'on modifie, brièvement, les paramètres du moteur pertinents pour la combustion au moyen d'une commande (4) du moteur de manière à augmenter significativement une concentration (RK) d'émission brute du côté du moteur, la modification des paramètres du moteur pertinents pour la combustion s'effectuant dans un fonctionnement en charge partielle dans une grande mesure stationnaire et
- **en ce que** l'on émet un message (FM) de défaillance du filtre, si les valeurs de mesure détectées associées de la concentration (FK) de particule dépassent une valeur (SW) de seuil de détection du capteur (3) de particules, qui est notamment nettement plus grande qu'une valeur (PG) limite de particules donnée à l'avance, de préférence rapportée au volume.

2. Procédé de diagnostic pour un filtre (2) à particules disposé dans un courant (UA) de gaz d'échappement d'un moteur (1) à combustion interne, dans lequel on détecte une concentration (FK) de particules au moyen d'un capteur (3) de particules monté en aval du filtre (2) à particules, **caractérisé**
- **en ce que** l'on contrôle le moteur (1) à combustion interne jusqu'à un état de fonctionnement dans lequel une concentration (RK) d'émission brute du côté du moteur est augmentée significativement, l'état de fonctionnement contrôlé étant un fonctionnement à grande charge, notamment un fonctionnement à pleine charge, et
- **en ce que** l'on émet un message (FM) de défaillance du filtre, si les valeurs de mesure détectées associées de la concentration (FK) de particules dépassent une valeur (SW) de seuil de détection du capteur (3) de particules, qui est notamment plus grande qu'une valeur (PG) limite de particules donnée à l'avance, de préférence rapportée au volume.

3. Procédé de diagnostic suivant l'une des revendications précédentes, **caractérisé en ce que** la valeur (PG) limite de particules rapportée au volume repose sur une valeur (AG) limite de gaz d'échappement d'une norme de gaz d'échappement, qui sert de norme rapportée en étendue pour le type du moteur (1) à combustion interne.
